# FASCICULE DE BREVET EUROPEEN

(11) **EP 1 836 134 B1**
(45) Date de publication et mention de la délivrance du brevet: **03.07.2013**
(21) Numéro de dépôt: 05825986.2
(22) Date de dépôt: 22.12.2005
(51) Int. Cl.: C03B 7/16, C03B 9/38

(54) **INSTALLATION ET PROCEDE POUR LA FABRICATION D'AU MOINS DEUX ARTICLES DE NATURE DIFFERENTE A PARTIR DE MATERIAUX THERMOPLASTIQUES MOULABLES**
VORRICHTUNG UND VERFAHREN ZUR HERSTELLUNG VON MINDESTENS ZWEI ARTIKELN VERSCHIEDENEN TYPS AUS THERMOPLASTISCHEN FORMMASSEN
INSTALLATION AND METHOD FOR MAKING AT LEAST TWO ARTICLES OF DIFFERENT TYPE FROM MOLDABLE THERMOPLASTIC MATERIALS

(30) Priorité: 30.12.2004 FR 0453251
(43) Date de publication de la demande: 26.09.2007
(73) Titulaire: SGD S.A., 92800 Puteaux (FR)
(72) Inventeur: FOSSE, Lucien, F-76260 Etalondes (FR); DESPORTES, Pierre-henri, F-76260 Eu (FR)
(74) Mandataire: Lucas, Francois
(86) Numéro de dépôt international: PCT/FR2005/051140
(87) Numéro de publication internationale: WO 2006/072728

(56) Documents cités:
- EP-A- 0 668 248
- FR-A- 1 465 091
- GB-A- 1 370 192
- US-A- 2 964 879

## Description

La présente invention est relative à la fabrication de produits en verre tels que bouteilles, flacons, pots....

Les procédés classiques et largement employés à l'heure actuelle pour fabriquer les produits précités mettent en oeuvre des machines dites I.S. (Individual Section) et sont connus sous les désignations de procédés «soufflé-soufflé», «pressé-soufflé» et «pressé pur». Au cours de la première étape, la paraison ou goutte de verre est introduite dans un moule ébaucheur dont la base est prolongée par un moule de bague servant à la mise en forme définitive de la partie supérieure ouverte du produit fabriqué. Dans la suite de la description, on parlera indifféremment de goutte de verre ou de paraison.

Le moule de bague a également une fonction de préhension de l'ébauche dans une opération ultérieure de retournement de celle-ci, préalable à la deuxième étape dans laquelle le moule ébaucheur est remplacé par un moule finisseur dans lequel le produit creux est mis en forme par soufflage.

Parmi les procédés couramment mis en oeuvre par la machine IS, le procédé «soufflé-soufflé» peut être décomposé en les étapes suivantes :
- *le chargement*: une goutte de verre ou paraison est acheminée et entre sous l'effet de son propre poids dans un premier moule (ébaucheur), par l'extrémité supérieure de celui-ci, correspondant au fond du produit fini tel que bouteille... ;
- *la compression* : après le chargement, un fond ébaucheur vient fermer le moule ébaucheur ; puis on effectue un soufflage d'air comprimé dans le moule ébaucheur par l'intermédiaire du fond ébaucheur pour forcer le verre à bien pénétrer dans la partie inférieure du moule, qui correspond à la bague du futur produit ; de plus cette compression assure un bon contact thermique entre le verre et le moule ;
- *le perçage* : un poinçon, de dimensions réduites et fermant le bas du moule ébaucheur, se retire vers le bas, laissant place à une alimentation en air comprimé qui chasse devant lui le verre chaud moins visqueux situé au voisinage de l'axe du moule ébaucheur, le verre froid plus visqueux qui a été refroidi au contact du moule restant, quant à lui, en place ; une ébauche du futur produit est ainsi obtenue ;
- *le transfert* : lorsque l'ébauche s'est suffisamment refroidie dans le moule ébaucheur pour pouvoir être manipulée, elle est transférée dans un second moule (finisseur) qui a la forme du produit final ;
- *l'allongement et le soufflage* : une fois placée dans le moule finisseur, on laisse l'ébauche s'allonger un certain temps avant de la souffler pour lui donner la forme du produit ; cette étape d'allongement permet de bien répartir le verre dans tout le produit ; au contact du moule finisseur, le verre se refroidit rapidement ;
- *l'extraction* : quand sa viscosité est suffisamment basse, le produit est extrait du moule finisseur.

Le procédé «pressé-soufllé» ne diffère quant à lui du procédé «soufflé-soufflé» que dans la phase de formage de l'ébauche, qui est obtenue par le pressage du verre dans le moule ébaucheur fermé, au moyen d'un poinçon plus ou moins long qui pénètre dans le moule par le bas de celui-ci à travers le moule de bague. Il n'y a donc pas d'étapes de compression ni de perçage, l'ébauche du produit étant formée en une seule fois par ce pressage.

Le dispositif mis en oeuvre comme indiqué ci-dessus ne constitue qu'une section d'une machine I.S. qui en comporte plusieurs. Chaque section est indépendante dans son fonctionnement des autres.
Selon les techniques connues, chaque section individuelle comporte autant de moules ébaucheurs que de moules finisseurs, leur nombre étant défini par le nombre de paraison initialement distribuées par le système d'alimentation au cours d'un même cycle, c'est à dire dans le même temps.
Les publications EP 668248A et EP 1266869 A1 décrivent des installations délivrant à chaque cycle un nombre de paraisons égal au nombre de moules ébaucheurs ou finisseur d'une section.
On distingue ainsi en production :
- un mode simple paraison dans lequel une seule goutte de verre est délivrée par cycle par le système d'alimentation vers une section comprenant un seul moule ébaucheur et un seul moule finisseur,
- un mode double paraisons dans lequel deux gouttes de verre sont délivrées simultanément par le système d'alimentation vers une section comprenant deux moules ébaucheurs montés en série et deux moules finisseurs montés en série,
- des modes triple (trois moules ébaucheurs et trois moules finisseurs) et quadruple paraisons (quatre moules ébaucheurs et quatre moules finisseurs).

Sur une installation ou unité pour la production de bouteilles ou de flacons en verre, par exemple suivant le nombre, la qualité recherchée ou la complexité des articles verriers à produire, le nombre de sections varie habituellement entre 2 et 20, le plus souvent entre 6 et 12, le mode de fonctionnement de la machine IS variant entre un mode simple paraison dans lequel au cours de chaque cycle, une section permet le formage d'un article et un mode quadruple paraison, dans lequel au cours de chaque cycle, une section permet le formage de quatre articles identiques. Des exemples de telles réalisations sont par exemple décrits dans l'ouvrage « The handbook of glass manufacture, 3rd edition, Vol II, Ashlee Publishing Co., Inc» ou dans les brevets US 3,552,942 ou US 3,597,187 auxquels on pourra se référer concernant les détails de mise en oeuvre et des dispositifs mécaniques utilisés dans de tels procédés.

Lorsque la production d'un article est achevée et avant l'entame d'une production d'une nouvelle gamme, l'ensemble de l'unité doit être arrêté et les moules changés. Lorsque nécessaire, la machine IS et/ou le système d'alimentation doivent être modifiés en fonction des conditions et limitations de la nouvelle production.

Lorsque des productions variées mais en petites quantités de flacons de différentes natures sont recherchées, on conçoit bien qu'un tel schéma de fonctionnement n'est pas satisfaisant car il entraîne un nombre important d'arrêts et de nombreuses interventions sur la machine et par suite un temps de production limité de l'unité. De plus, chaque production nécessite la mise en oeuvre d'une unité de fabrication dont le nombre est le plus souvent limité dans l'usine. En outre, chaque unité doit être commandée par au minimum un opérateur.

L'un des buts de la présente invention est d'accroître la flexibilité et la productivité d'une unité de fabrication d'articles préférentiellement verriers tels que des bouteilles, pots ou flacons. Un tel but est atteint selon l'invention en modifiant l'unité de telle façon que celle-ci soit capable d'effectuer le formage d'au moins deux récipients de poids et/ou de morphologie différents au cours d'une même production.

Un autre but de l'invention est de fournir éventuellement en sortie de la machine IS un ordre prédéterminé, par exemple une alternance, des différents type de récipients se succédant sur le convoyeur. Un tel ordre permet en sortie de convoyeur un tri ou une séparation facilités desdits récipients, typiquement en vue de permettre des traitements ultérieurs différents ou pour faciliter l'emballage respectif des récipients.

Plus précisément, la présente invention se rapporte à une installation selon la revendication 1.

Par exemple, le nombre de paraisons délivrées est un multiple entier du nombre de moule(s) ébaucheur(s) ou finisseur(s) compris dans chaque section individuelle de la machine IS.

Selon un mode possible, le système d'alimentation délivre deux paraisons et chaque section individuelle comprend un moule ébaucheur et un moule finisseur.

Le système d'alimentation est configuré pour l'obtention d'au moins deux paraisons de poids et/ou de morphologie différents. Le système d'alimentation peut comprendre dans ce but des orifices d'écoulement des paraisons de diamètre différent et/ou des plongeurs dont la hauteur permettant la formation des paraisons est différente.

En outre l'installation peut comprendre un système de distribution des paraisons, du système d'alimentation aux différentes sections, comprenant un ensemble cuiller/couloir /déflecteur monté en alignement de chaque section, les couloirs et les déflecteurs étant fixes et les cuillers étant montées sur des vérins.

Selon un mode possible de réalisation de l'installation, une cuiller est montée par vérin, lesdits vérins étant configurés de telle manière que leur action permette d'amener successivement chaque cuiller en position de recueillir une des paraisons issues du système de distribution et d'amener celle-ci en alignement, par l'intermédiaire d'un couloir et d'un déflecteur fixe, d'un moule ébaucheur d'une section configurée pour le formage d'un produit.

Selon un autre mode possible de réalisation de l'installation, plusieurs cuillers sont montées par vérin, les cuillers étant orientées et les vérins étant configurés de telle manière que l'action desdits vérins permette au cours d'un même cycle d'amener lesdites cuillers en position de recueillir les paraisons issues du système de distribution et d'amener celles-ci en alignement, par l'intermédiaire de couloirs et de déflecteurs fixes, de sections différentes pour le formage de produits de différentes natures.

Selon un autre mode possible de réalisation de l'installation, celle ci comprend un système du type gob-distributeur pour la récupération et la distribution des paraisons issues du système d'alimentation, ledit gob-distributeur étant prolongé par des cuillers.

L'installation peut en outre comprendre des moyens d'éjection associés à chaque paraison délivrée par le système d'alimentation.

Eventuellement, l'action respective desdits moyens d'éjection est couplée avec celle du gob distributeur de telle manière qu'au cours d'un cycle, l'action des moyens d'éjection permette l'éjection d'au moins une paraison perdue et que le mouvement du gob distributeur permette la récupération d'au moins une autre paraison par au moins une cuiller et l'alignement, par l'intermédiaire de couloirs et de déflecteurs fixes, de cette ou ces cuillers sur la ou les sections correspondantes.

Par exemple, chaque cuiller est commandée par un système séparé, par exemple par un jeu pignon-crémaillère différent, ladite commande séparée étant configurée pour permettre l'alignement de chaque cuiller supportée par le gob-distributeur avec les différentes sections individuelles selon un ordre défini, au cours des cycles successifs de formage de produits de différentes natures.

L'installation peut en outre comprendre un dispositif permettant une ventilation asymétrique de deux moules différents et contigus sur la la machine IS, ledit dispositif comprenant un empilement non symétrique de pièces fermées ou comprenant des ouvertures pour la ventilation d'air vers les parties à refroidir des moules.

L'invention se rapporte en outre à un procédé de fabrication d'au moins deux produits de taille et/ou de morphologie différents selon revendication 13.

Selon le procédé, l'alimentation des sections peut être effectuée par l'action d'un jeu de vérins pneumatiques, chaque vérin supportant une ou plusieurs cuillers et chaque cuiller étant amenée en position pour alimenter une section individuelle de la machine IS dans un ordre déterminé, via un système couloir/déflecteur fixe.

L'alimentation des sections peut aussi être effectuée par l'action d'un mécanisme gob-distributeur, prolongé par une série de cuillers, chaque cuiller étant amenée en position pour alimenter une section individuelle de la machine IS, dans un ordre déterminé, via un système couloir/déflecteur fixe. Selon une mise en oeuvre possible du procédé, au moins une des paraisons délivrées par le système d'alimentation n'est pas utilisée pour le formage des différents produits.

Selon une autre mise en oeuvre possible du procédé, toutes les paraisons délivrées par le système d'alimentation sont utilisées pour le formage des différents produits.

Avantageusement, au cours du procédé, les sections individuelles sont alimentées dans un ordre permettant une succession déterminée des produits en sortie de la machine IS.

Enfin, l'invention concerne l'utilisation de l'installation, du dispositif ou dispositif ou du procédé précédemment décrits pour le formage de récipients en verre telle que des bouteilles, pots, bouchons ou flacons.
L'invention et ses avantages seront mieux compris à la lecture de la description qui suit, en relation avec les figures annexées, de différents modes de réalisations possibles de l'invention.
La figure 1 décrit schématiquement le principe de fonctionnement d'une machine IS fonctionnant à l'heure actuelle selon un mode double paraison.
Les figures 2a et 2b et 3 illustrent un premier mode de réalisation de l'invention permettant le formage de deux articles, par exemple deux flacons de nature différente, à partir de la distribution de deux paraisons, une seule des deux paraisons étant utilisée par cycle pour le formage.
Les figures 4a, 4b, 4c illustrent un deuxième mode de réalisation de l'invention analogue au précédent mais dans lequel est utilisé un gob distributeur. La figure 4b est une vue perpendiculaire en coupe selon l'axe AA de la figure 4a, La figure 4c est une vue perpendiculaire en coupe selon l'axe BB de la figure 4a.
Les figures 5, 6a, 6b, 7a, 7b et 8 illustrent un troisième mode de réalisation de l'invention dans lequel on utilise les deux paraisons distribuées au cours d'un même cycle pour le formage de deux flacons différents.
La figure 9a schématise un dispositif de ventilation actuellement utilisé pour refroidir des moules de deux sections adjacentes sur la machine IS.
Les figures 9b, 9c schématisent un dispositif selon l'invention pour la ventilation asymétrique de deux moules différents et contigus sur la machine IS.

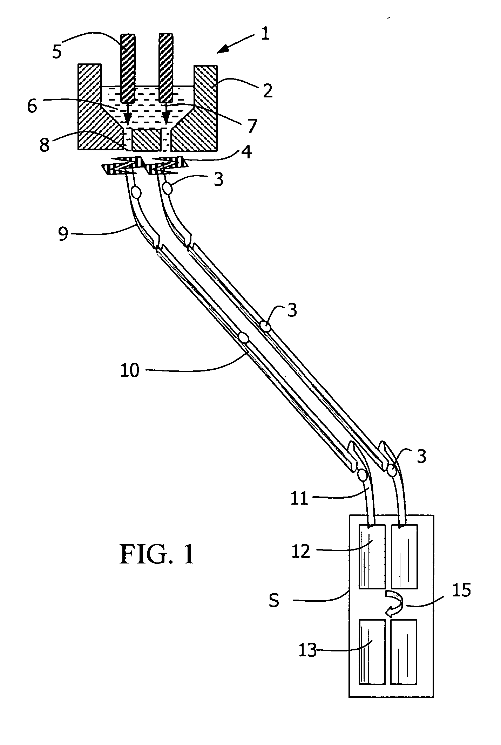

Dans toutes les figures et dans la description qui suit, on utilise, pour des raisons de clarté, la même numérotation pour désigner des éléments identiques ou remplissant une fonction sensiblement identique. Il est bien entendu que les différents modes illustrés par les figures 1 à 9 ne sont donnés qu'à titre illustratif et ne doivent sous aucun des aspects décrits être considérés comme limitatifs de l'invention dans son ensemble.
En particulier, alors qu'on décrit par la suite différents modes de réalisation dans lesquels la machine IS permet le formage de deux flacons de nature différente, des modifications de routine peuvent bien évidemment être apportées à ces modes sans sortir du cadre de l'invention, par exemple pour adapter ladite machine à la production simultanée de trois, voire quatre flacons différents à partir d'une alimentation triple ou quadruple paraison, en appliquant les mêmes principes que ceux qui vont maintenant être décrits.
La figure 1 décrit schématiquement le principe de fonctionnement d'une machine IS fonctionnant à l'heure actuelle selon un mode double paraison.
La machine IS comprend un nombre de sections typiquement compris entre 2 et 20, le plus souvent entre 6 et 12, chaque section comprenant autant de moules ébaucheurs et de moules finisseurs que de paraisons formées au même instant. Sur la figure 1, on a schématisé l'alimentation d'une section individuelle S par un système d'alimentation double paraison 1. Classiquement, le système d'alimentation 1 comprend une rondelle d'écoulement 2 de laquelle sont issues et calibrées deux gouttes de verre 3 identiques, deux plongeurs 5 et des ciseaux 4 situés sous ladite rondelle. L'extrémité inférieure des plongeurs 5 plonge dans le bain de verre fondu 6 contenu dans la rondelle d'écoulement 2. La course verticale des plongeurs 5, schématisée par la flèche 7, est ajustée en fonction de la taille recherchée pour la paraison.
Classiquement, la section S comprend deux moules ébaucheurs 12 et deux moules finisseurs 13 pour la réception des deux gouttes de verre 3 issues du système 1.

En fonctionnement, les gouttes 3 sont délivrées vers la machine IS par l'intermédiaire d'orifices d'écoulement 8 pratiqués dans le corps de la rondelle 2. Les gouttes de verre formées par la poussée des plongeurs tombent après la coupe des ciseaux 4 dans des cuillers 9 disposées sous le système d'alimentation 1. Les cuillers 9 sont contiguës avec des goulottes ou couloirs fixes 10 qui guident la goutte jusqu'à des déflecteurs fixes 11 dont le rôle est d'amener la paraison à l'entrée des deux moules ébaucheurs 12 de la section individuelle S. Classiquement, la section S comprend deux moules ébaucheurs 12 pour la réception des deux gouttes de verre 3 issues du système 1. L'ébauche est ensuite transférée à deux moules finisseurs 13, le transfert étant symbolisé sur la figure 1 par la flèche 15.

Selon des techniques bien connues, les cuillers peuvent être :
- soient montées, via des porte-cuillers, sur des vérins dont l'action commandée permet d'amener la partie supérieure de celles-ci en position pour recueillir la ou les paraisons issues du système d'alimentation, la partie inférieure des cuillers étant dans le même temps positionnée dans la continuité des couloirs fixes 10,
- soient montées mobiles en rotation dans un mécanisme distributeur, ladite rotation permettant d'alimenter alternativement et dans un ordre déterminé les différentes sections de la machine IS.

Ce dernier dispositif, dans lequel des cuillers superposées sont montées mobiles en rotation, est couramment appelé dans le métier gob distributeur ou encore gob. Ses principes de fonctionnement sont par exemple illustrés par les brevets US 3,552,942 ou US 3,597,187.
Le gob distributeur est habituellement commandé par un même ensemble pignon/ crémaillère entraîné par un moteur électrique ou par un ensemble mécanique embiellage/came. Par ce biais, les cuillers sensiblement superposées, orientées dans une même direction, sont animées en fonctionnement d'un même mouvement angulaire autour de l'axe de chute des gouttes de façon à alimenter simultanément les couloirs double, triple ou quadruple paraison d'une même section.

Dans les deux modes, le mécanisme distributeur selon l'art antérieur comprend un nombre de cuillers égal au nombre de paraisons, montées sensiblement en superposition dans un plan vertical.

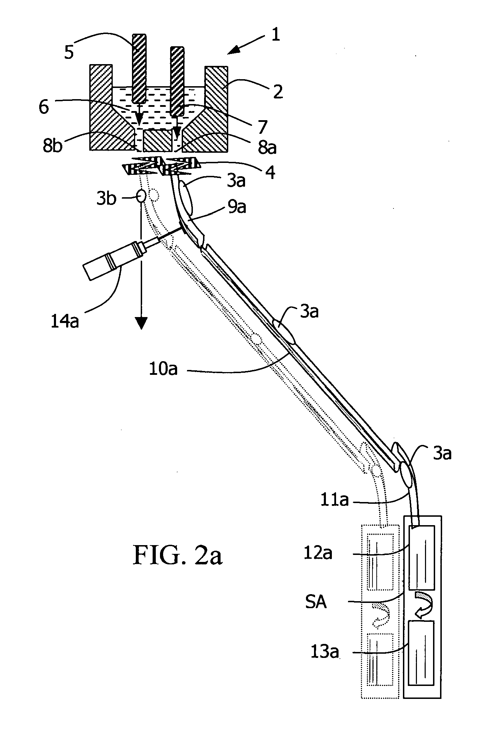

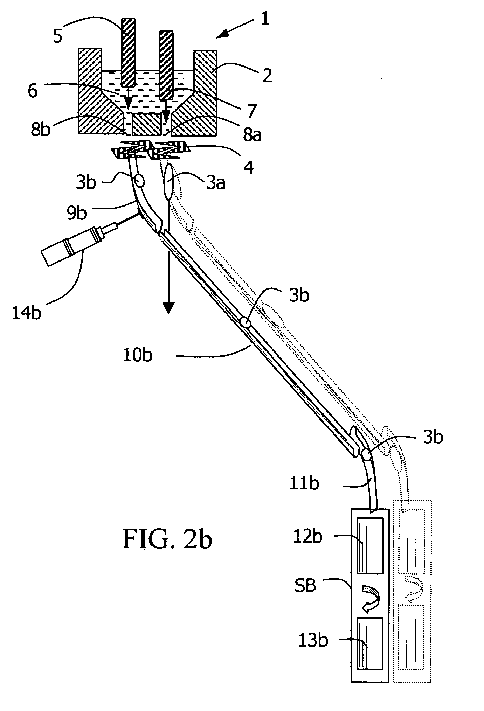

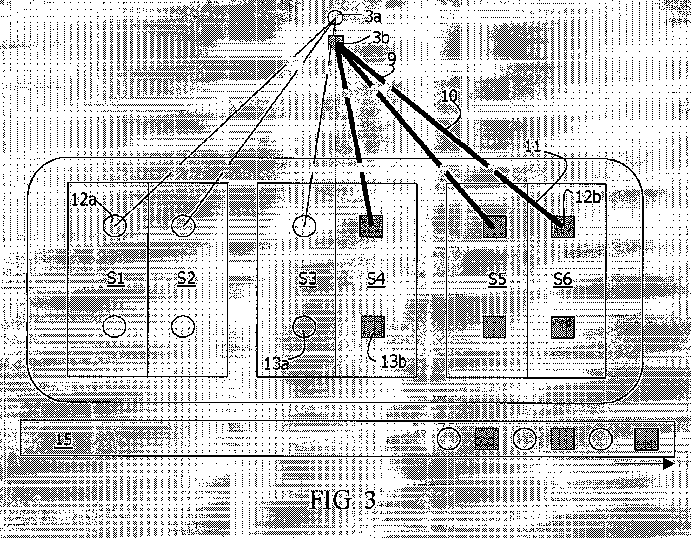

Les figures 2a, 2b et 3 illustrent un premier mode de réalisation de l'invention, permettant selon l'invention le formage de deux flacons de poids et/ou de morphologie différents. Selon ce premier mode de réalisation, on utilise une machine IS fonctionnant en mode simple paraison (un moule ébaucheur et un moule finisseur par section), qu'on associe de manière nouvelle à un système d'alimentation double paraison, c'est à dire délivrant deux gouttes de verre.

Selon l'invention, on calibre, par modification du système de distribution 1, deux paraisons 3a et 3b de poids et/ou de morphologie différents, par exemple soit en adaptant la hauteur 7 de chaque plongeur 5, soit en changeant le diamètre respectif des orifices d'écoulement 8a et 8b pour chaque paraison, soit par une combinaison de ces deux paramètres. Sans sortir du cadre de l'invention, on peut également jouer sur le profil et le diamètre des plongeurs pour obtenir le calibrage recherché des gouttes de verre.

Selon ce premier mode, on met en oeuvre pour chaque cuiller individuelle un vérin pneumatique équipé de porte-cuiller. Comme illustrée par la figure 2a, une première cuiller 9a est associée à un vérin 14a dont l'action permet d'amener celle-ci en position pour recueillir la paraison 3a issue de l'orifice 8a et l'amener en alignement d'un couloir fixe 10a et d'un déflecteur fixe 11a guidant la paraison vers un premier moule ébaucheur 12a d'une section SA. Après formage, un premier flacon de forme A est distribué sur le convoyeur (non représenté). La deuxième paraison 3b, issue de l'orifice 8b, n'est pas utilisée et est par exemple directement envoyée à la cave, suivant une procédure bien connue dans le métier ou dirigée vers une goulotte à calcin, tel qu'illustré dans le brevet FR 2 554 105.
Dans le cycle suivant de formation et de distribution des paraisons, illustré par la figure 2b, une autre section SB de la machine IS est alimentée. La section individuelle SB comprend des moules ébaucheur 12b et finisseur 13b pour le formage d'un deuxième flacon de forme B. On sélectionne à cet effet la deuxième paraison, c'est à dire celle issue de l'autre orifice d'écoulement 8b. Ainsi, par le jeu d'un vérin 14b équipé d'un porte-cuiller, la cuiller 9b est amenée en position de recevoir la goutte 3b. Selon un processus identique à celui précédemment décrit, la goutte 3b est ensuite amenée via les couloir 10b et déflecteur 11b vers le moule ébaucheur 12b de la section SB.
La machine IS selon l'invention permet ainsi de fabriquer un flacon par section à partir d'une alimentation double paraison et d'une machine IS simple paraison, chaque flacon pouvant être de nature différente, en fonction de la configuration de la section alimentée.
Avantageusement, la mise en oeuvre du mode de réalisation tel qu'il vient d'être décrit peut par exemple être réalisée à moindre coût sans frais supplémentaires d'études et/ou de fabrication en adaptant selon les besoins du matériel habituellement utilisé dans les mécanismes simple, double, triple ou quadruple paraisons. A titre d'exemple, dans le mode illustré par les figures 2a et 2b, des systèmes à vérin conventionnels peuvent être utilisés selon l'invention, équipés de porte-cuiller du type double paraison mais sur lesquels une seule cuiller est montée. Il est également possible d'utiliser un couloir du type double paraison (c'est à dire habituellement utilisé pour un procédé double paraison) et un déflecteur simple paraison pour chaque section, l'ensemble cuiller/couloir/déflecteur étant aligné selon l'invention sur les différentes sections à alimenter par une modification adaptée des différents supports.

La figure 3 est une vue synoptique illustrant un exemple de fonctionnement de ce mode dans lequel la présente invention est avantageusement appliquée à une machine IS comprenant 6 sections. Dans cet exemple, on schématise par un rond creux la paraison 3a et par un carré plein la paraison 3b. L'ensemble cuiller-couloir-déflecteur, respectivement repérés par les numéros 9, 10, 11 sur la figure 3, est représenté selon ce schéma par une ligne en discontinu, les lignes fines correspondant à celles acheminant les paraisons 3a vers les moules ébaucheurs 12a et finisseurs 13a pour le formage des flacons A et les lignes épaisses correspondant à celles acheminant les paraisons 3b vers les moules ébaucheurs 12b et finisseurs 13b pour le formage des flacons B.

Sans que cela puisse être considéré comme limitatif, on voit que selon le mode possible de réalisation de la figure 3, les positions successives des sections S sur la machine IS sont du type AAABBB, c'est à dire que les sections 1 à 3 sont équipées de moules pour le formage du flacon A (section du type SA) et les sections 4 à 6 par des moules pour le formage du flacon B (section du type SB).

Toutes les combinaisons possibles en ce qui concerne la position et le nombre respectif des sections SA et SB doivent bien entendu être considérées comme comprise dans le cadre de l'invention. Par exemple, pour une machine IS comprenant 6 sections, on pourrait équiper la machine d'une seule section SA et de cinq sections SB, de deux sections SA et de quatre sections SB, etc., en fonction par exemple de la quantité respective des flacons à produire.

Selon l'invention, on peut de même envisager toutes les combinaisons possibles dans l'ordre d'alimentation des sections. Cet ordre peut par exemple être fonction des limitations de la machine IS elle-même lors de son fonctionnement, c'est à dire des risques d'interférences entre les différentes pièces mécaniques en mouvement ou encore de l'ordre des flacons désiré sur le convoyeur en sortie de la machine IS.
Par exemple pour une machine IS comprenant six sections disposée sur la machine IS dans une configuration AABBAB, on définit en conséquence selon les techniques de l'art un ordre d'alimentation des sections 163524, permettant d'obtenir finalement sur le convoyeur 15 une succession des flacons dans un ordre AAABBB. Cette succession permet ensuite un tri facilité en sortie de la ligne de production, par exemple dans l'optique d'un emballage facilité des flacons.

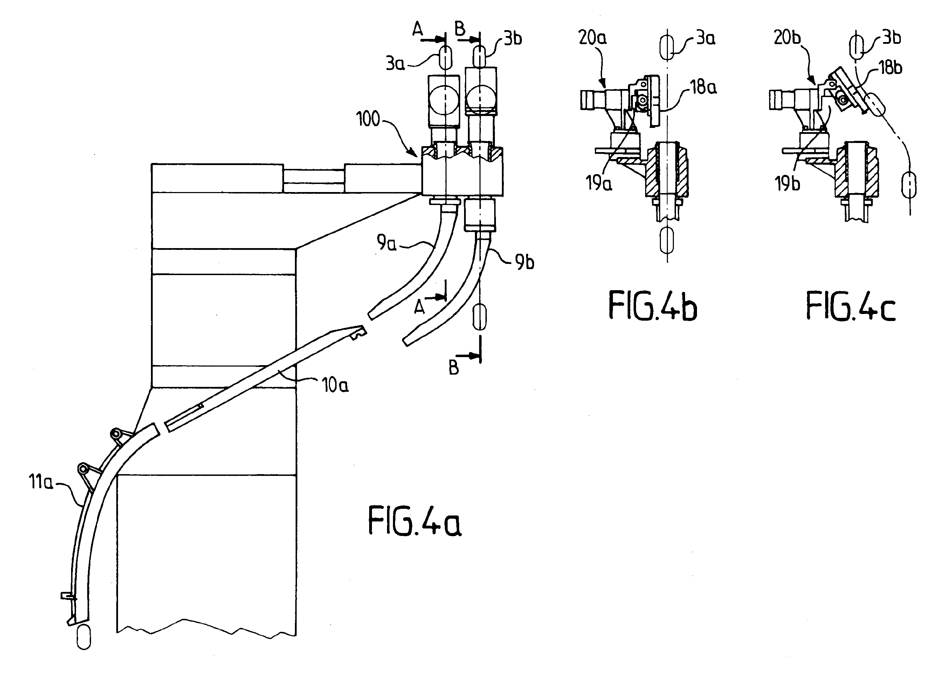

Selon un deuxième mode de réalisation, les systèmes vérins/porte-cuiller sont remplacés par un mécanisme gob-distributeur tel que précédemment cité. Les paraisons sont successivement orientées par l'action du mécanisme distributeur vers les systèmes fixes couloirs/déflecteurs et alimentent les sections individuelles dans un ordre défini.
Selon un exemple de ce mode de réalisation, illustré par les figures 4a, 4b et 4c, on utilise un système d'alimentation double paraison qui peut être modifié pour délivrer deux paraisons de nature différente. On sélectionne alternativement une paraison sur deux selon la méthode décrite ci-après, par exemple la paraison 3a puis la paraison 3b. De manière similaire au mode précédent, on monte avantageusement un couloir du type double paraison et un déflecteur simple paraison fixe sur chaque section et on aligne chaque ensemble cuiller/couloir/déflecteur sur les sections à alimenter en modifiant leurs supports respectifs.
On utilise avantageusement selon l'invention un mécanisme gob distributeur 100 habituellement utilisé pour un procédé double paraison. Le gob distributeur 100 se prolonge par deux cuillers 9a et 9b sensiblement superposées dans un plan vertical et réceptionnant respectivement les paraisons 3a et 3b (figure 4a).
La commande du gob distributeur (commande mécanique (came) ou électrique (moteur)) est ajustée dans les règles de l'art pour obtenir un bon alignement des cuillers 9a ou 9b au cours des cycles successifs avec les sections à alimenter de la machine IS.
La machine IS est également selon l'invention équipée de deux dispositifs d'éjection 20a et 20b sur chacun desquels est montée une palette d'éjection inclinée (18a, 18b) grâce à un système d'attache réglable entre deux positions par exemple au moyen d'un piston (19a, 19b). La palette peut par exemple être constituée de graphite.
L'action respective des dispositifs d'éjection 20a, 20b est couplée avec celle du gob distributeur 100. Au cours d'un premier cycle de délivrance des deux paraisons, illustré par les figures 4a, 4b et 4c, l'action du dispositif 20b amène la palette inclinée 18b au dessus du gob 100 de façon à permettre l'éjection de la paraison 3b (figure 4c). Dans le même temps, le mouvement du gob distributeur et le maintien de la palette 18a dans une position de retrait (figure 4b) permet l'alignement de la cuiller 9a et l'acheminement de la paraison 3a vers une section SA (non représentée) via l'ensemble couloir 10a / déflecteurs 11a, c'est à dire la distribution de la paraison 3a à la section SA (figure 4a).

Au cours d'un cycle ultérieur d'alimentation (non représenté), l'action du dispositif 20a amène la palette inclinée 18a au dessus du passage du gob distributeur 100 amenant à la cuillère 9a et permet l'éjection de la paraison 3a. Dans le même temps, le mouvement du gob distributeur et le retrait de la palette 18b permettent l'alignement de la cuiller 9b sur une section SB et la distribution de la paraison 3b à ladite section.

Dans les deux cas, la paraison éjectée est soit directement envoyée à la cave, soit dirigée vers une goulotte à calcin.
De même que pour le premier mode, il est possible d'envisager suivant ce second mode tous les arrangements possibles, notamment en ce qui concerne le nombre respectif de sections du type SA ou SB, ainsi que tous les ordres d'alimentation possibles des différentes sections en fonction des besoins en tenant compte des interférences possibles.

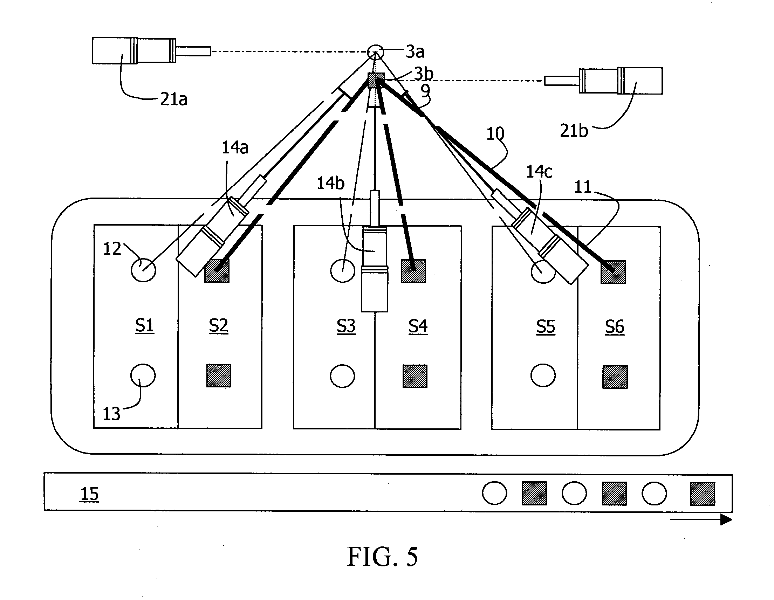

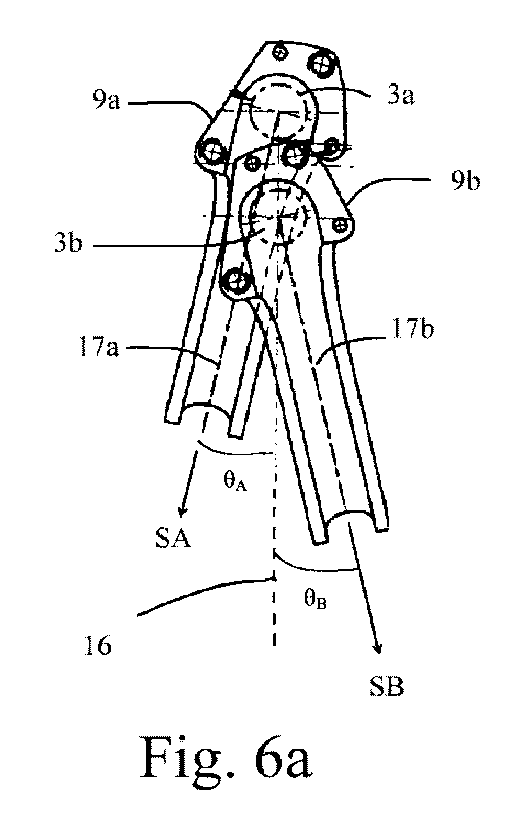

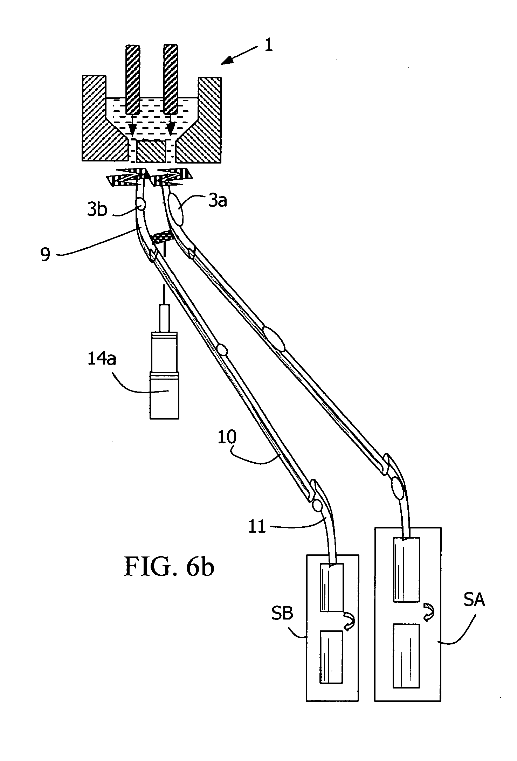

Selon un troisième mode de réalisation de l'invention, on utilise également une machine IS fonctionnant en mode simple paraison, qu'on associe de manière nouvelle à un système d'alimentation double paraison, c'est à dire délivrant deux gouttes de verre qui peuvent être de nature différente. Les deux paraisons 3a et 3b délivrées simultanément sont selon ce mode utilisées pour le formage de deux articles A et B, c'est à dire qu'il n'y a pas de paraison perdue, à la différence des deux modes qui précèdent.
Suivant ce mode, illustré par les figures 5, 6a, 6b, 7a, 7b, on met en oeuvre un vérin pneumatique 14a équipé avantageusement des porte-cuiller habituellement utilisés en alimentation double paraison, c'est à dire supportant deux cuillers (figure 6b). Le porte-cuiller est modifié selon l'invention de telle façon que l'orientation des deux cuillers soit différente (figure 6a), c'est à dire de telle façon que chacune d'entre elles puisse alimenter une section différente dans un même cycle.

La figure 6b donne une vue schématique de deux cuillers 9a et 9b dont l'orientation a été modifiée selon l'invention pour être en alignement respectivement des sections SA et SB, via des couloirs et des déflecteurs dont l'orientation a été modifiée en conséquence.

Sur la figure 6a, on voit que les angles θ_{A} et θ_{B} des cuillers 9a et 9b, définis par l'axe 16 de la machine IS et les axes longitudinaux respectifs 17a et 17b de chaque alignement cuiller/couloir/déflecteur, sont individuellement ajustés de telle façon que chaque cuiller superposée ne conduise pas à une même section individuelle double paraison (deux moules ébaucheurs et deux moules finisseurs) mais à deux sections individuelles différentes simple paraison du type SA et SB.
De même que précédemment, on monte avantageusement un couloir du type double paraison et un déflecteur simple paraison fixe sur chaque section et on aligne chaque ensemble cuiller/couloir/déflecteur sur les différentes sections à alimenter par exemple en modifiant leurs supports respectifs.

Un exemple d'application de ce mode à une machine IS à six sections est illustré de manière synoptique par la figure 5. L'action de trois vérins 14a, 14b, 14c permet l'alimentation des six sections S1 à S6 de la machine IS et le formage de deux articles A et B de nature différente selon trois cycles successifs. Plus précisément, selon les principes décrits précédemment en relation avec les figures 6a et 6b, on monte sur un premier vérin 14a, équipé de porte cuillers adaptés, deux cuillers dont l'orientation est ajustée pour l'alimentation simultanée des sections S1 et S2. On monte également sur un deuxième vérin 14b deux autres cuillers dont l'orientation est ajustée pour l'alimentation simultanée des sections S3 et S4 et sur un troisième vérin 14c deux cuillers pour l'alimentation des sections S5 et S6.

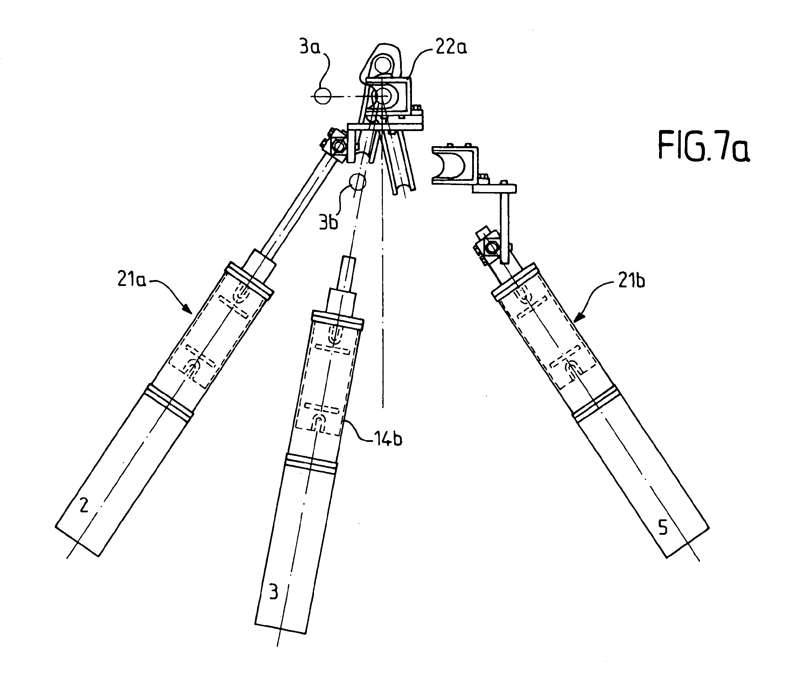

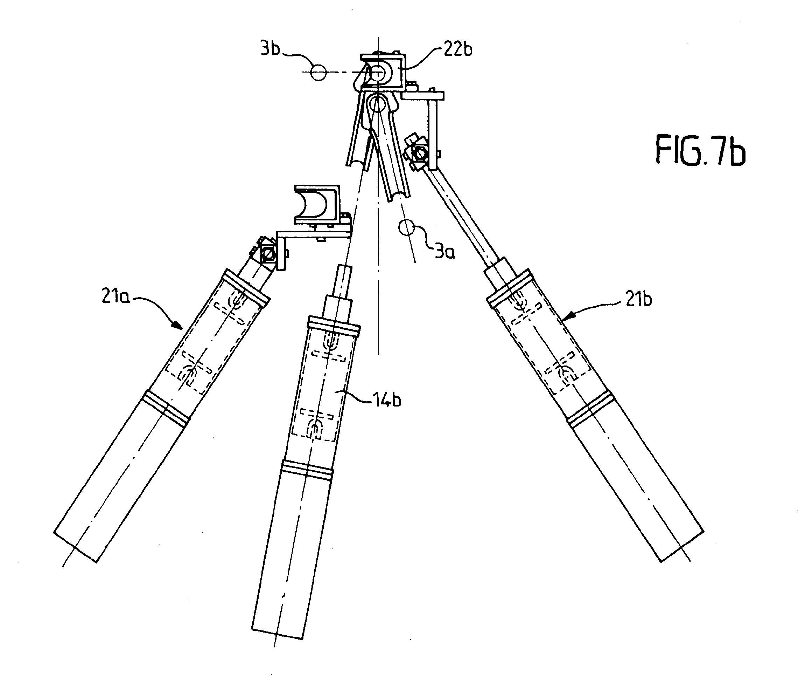

Selon un mode préféré de réalisation de ce mode illustré par les figures 7a et 7b, on dispose également deux cylindres ou vérins d'éjection 21a et 21b sur chacun desquels est montée une palette d'éjection inclinée 22a, 22b grâce à un dispositif d'attache réglable, selon un principe sensiblement identique à celui précédemment décrit en relation avec les figures 4a, 4b et 4c. L'action respective de ces deux cylindres permet soit l'éjection de la paraison 3a (figure 7a), soit l'éjection de la paraison 3b (figure 7b) lorsque nécessaire, par exemple lorsqu'on cherche à régler individuellement chaque section individuelle lors du démarrage de la production ou pour éviter de stopper l'ensemble de l'unité en cas de mauvais fonctionnement d'une section individuelle.

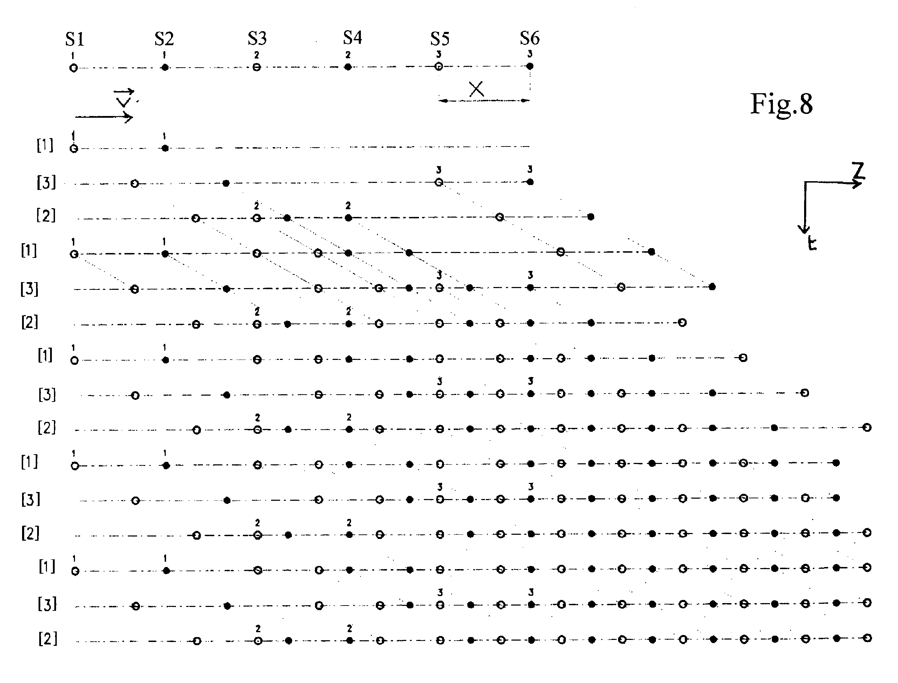

La figure 8 illustre le fonctionnement d'une unité telle qu'elle vient d'être décrite en liaison avec les figures 5 à 7 et dans lequel une alternance des flacons A et B est recherchée sur le tapis convoyeur en sortie de la machine IS. Les sections S1 et S2 sont alimentées au cours d'un premier cycle pour le formage des deux flacons A (représentés par un rond blanc) et B (représentés par un rond noir) qui sont ensuite repoussés sur le tapis et progressent avec une vitesse V le long de celui-ci, suivant l'axe Z (ligne [1]). Au cours du cycle suivant, représenté sur la figure 8 par une deuxième ligne [3] dans la direction de l'axe t, les sections S5 et S6 sont alimentées, puis les sections S3 et S4 dans un troisième cycle, représenté sur la figure 8 par une troisième ligne [2] dans la direction de l'axe t. L'ordre d'alimentation des sections et de formage des articles est donc 1 3 2, dans lequel 1 représente l'alimentation simultanée des sections S1 et S2, 3 représente l'alimentation simultanée des sections S5 et S6 et 2 représente l'alimentation simultanée des sections S3 et S4. La figure 8 permet ainsi de visualiser dans le temps suivant l'axe t la succession des cycles, ainsi que l'avancée sur le convoyeur des articles formés au cours des cycles successifs.

On ajuste ensuite selon les règles de l'art la vitesse d'avancée du tapis V en fonction de l'entraxe X entre deux sections successives de la machine IS, de manière à obtenir une alternance finale des articles A et B et par suite un tri en aval facilité.

Ainsi, la figure 8 illustre un exemple d'un tel ajustement de la vitesse V du tapis en fonction de la distance X entre deux sections pour qu'au fur et à mesure de la succession des cycles d'alimentation dans l'ordre 1 3 2 précédemment défini, les articles déjà formés circulant suivant l'axe Z sur le tapis et ceux formés par les cycles suivants s'intercalent successivement pour former finalement une alternance ABABAB des articles en sortie du convoyeur.

Selon un quatrième mode de réalisation de l'invention, on utilise les deux paraisons de poids et/ou de morphologie différents obtenues par le système d'alimentation précédemment décrit (pas de paraison perdue) et on distribue les gouttes par un mécanisme gob-distributeur du type double paraison se prolongeant par deux cuillers orientées différemment.
Selon ce mode, on modifie le gob-distributeur de telle façon que l'orientation et la rotation des deux cuillers selon l'axe vertical ne soit plus identiques mais indépendantes, plus précisément de telle façon que chacune des cuillers puisse alimenter au cours d'un même cycle une section différente. De manière similaire aux modes précédents, on monte avantageusement un couloir du type double paraison et un déflecteur simple paraison fixe sur chaque section et on aligne chaque ensemble cuiller/couloir/déflecteur sur les sections à alimenter par exemple en modifiant leurs supports respectifs.

Les deux cuillers sont commandées par des systèmes indépendants, par exemple par le jeu d'une liaison pignon/crémaillère différente pour chaque cuiller. Cette commande séparée est arrangée selon les règles de l'art pour permettre l'alignement de chaque cuiller avec les différentes sections individuelles selon un ordre défini au cours des cycles successifs de la machine IS.

Ce mode de réalisation ne diffère du troisième mode précédemment décrit que par l'utilisation d'un gob distributeur au lieu des systèmes vérin/porte-cuiller. Ainsi, les principes de fonctionnement de ce quatrième mode peuvent être les mêmes que ceux décrits suivant ce mode.

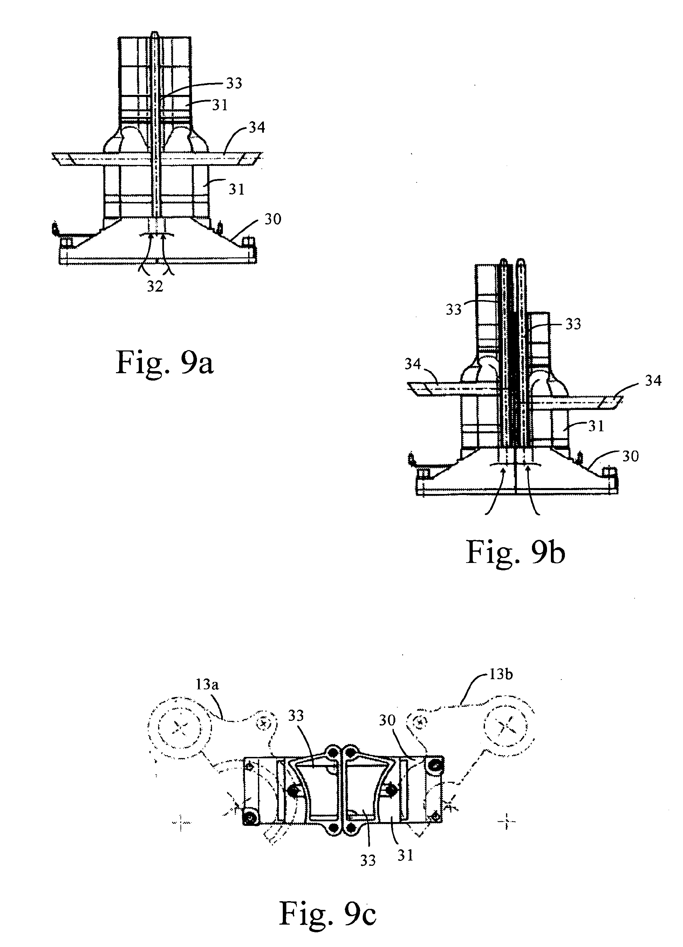

La figure 9a est une illustration d'un dispositif de ventilation habituellement utilisé pour deux moules ébaucheurs adjacents identiques d'une machine IS conventionnelle. Le dispositif comprend une embase creuse 30 permettant un passage d'air 32 le long d'une conduite centrale 33. Sur l'embase 30 est monté un empilement de pièces 31 qui soit sont fermées, soit comprennent des ouvertures 34 permettant la ventilation de l'air frais 32 issu de l'embase 30 vers la partie du moule à refroidir (non représenté).

Selon la présente invention, on voit que des moules de tailles variables peuvent être contigus sur la machine IS, par exemple les moules ébaucheurs (ou finisseurs) des sections S3 et S4 sur les figures 3 ou 5, servant au formage de deux articles différents A et B. Selon un fonctionnement privilégié de la présente invention, on refroidit ces moules à des hauteurs variables grâce à un dispositif permettant une ventilation asymétrique des moules. Avantageusement, tel qu'illustré par les figures 9b et 9c, les systèmes de ventilation selon l'invention peuvent être enveloppants, c'est à dire qu'ils sont usinés et dédiés aux différents moules de telle manière qu'ils les entourent entièrement, de façon à optimiser les échanges thermiques et le refroidissement des moules.
Les figures 9b et 9c montrent un tel dispositif pour la ventilation asymétrique de deux moules différents et contigus sur la machine IS, par exemple les deux moules finisseurs 13a et 13b des sections S3 et S4 de
la figure 3. La figure 9c est une coupe transversale de la figure 9b sur laquelle une partie des moules 13a et 13b est représentée en ligne pointillée.
Par comparaison avec la figure 9a, on voit que le dispositif comprend un empilement non symétrique des pièces 31, ce qui permet avantageusement une ventilation non symétrique, c'est à dire à des endroits différents, des deux moules 13a et 13b.

## Revendications

1. Installation pour la fabrication d'au moins deux produits (A, B) de taille et/ou de morphologie différents en verre, comprenant :
- une machine IS comprenant un nombre de sections individuelles (SA, SB) typiquement compris entre 2 et 20, chaque section comprenant un nombre égal de moule(s) ébaucheur(s) (12) et de moule(s) finisseur(s) (13), la machine IS comprenant au moins une section SA de formage du produit A et au moins une section SB de formage du produit B,
- un système d'alimentation (1) de ladite machine IS permettant, à chaque cycle, la délivrance d'au moins deux paraisons (3a, 3b),
ladite installation étant **caractérisée en ce que** le système d'alimentation est tel que lesdites au moins deux paraisons (3a, 3b) sont de poids et/ou de morphologie différents et **en ce que** le nombre de paraisons délivré par le système d'alimentation est supérieur au nombre de moule(s) ébaucheur(s) ou finisseur(s) compris dans une section individuelle de la machine IS.

2. Installation selon la revendication 1 dans lequel le nombre de paraisons délivrées est un multiple entier du nombre de moule(s) ébaucheur(s) ou finisseur(s) compris dans chaque section individuelle de la machine IS.

3. Installation selon la revendication 1 ou 2, dans lequel le système d'alimentation délivre deux paraisons et dans lequel chaque section individuelle comprend un moule ébaucheur et un moule finisseur.

4. Installation selon la revendication 3 dans lequel le système d'alimentation comprend des orifices d'écoulement des paraisons de diamètre différent et/ou des plongeurs dont la hauteur permettant la formation des paraisons est différente.

5. Installation selon l'une des revendications précédentes comprenant en outre un système de distribution des paraisons, du système d'alimentation aux différentes sections, comprenant un ensemble cuiller/couloir /déflecteur monté en alignement de chaque section, les couloirs et les déflecteurs étant fixes et les cuillers étant montées sur des vérins.

6. Installation selon la revendication 5 dans laquelle une cuiller (9a, 9b) est montée par vérin (14a, 14b), lesdits vérins étant configurés de telle manière que leur action permette d'amener successivement chaque cuiller en position de recueillir une des paraisons (3a, 3b) issues du système de distribution et d'amener celle-ci en alignement, par l'intermédiaire d'un couloir et d'un déflecteur fixe, d'un moule ébaucheur (12a, 12b) d'une section (SA, SB) configurée pour le formage d'un produit (A, B).

7. Installation selon la revendication 5 dans laquelle plusieurs cuillers (9) sont montées par vérin (14a, 14b, 14c), les cuillers étant orientées et les vérins étant configurés de telle manière que l'action desdits vérins permette au cours d'un même cycle d'amener lesdites cuillers en position de recueillir les paraisons (3a, 3b) issues du système de distribution (1) et d'amener celles-ci en alignement, par l'intermédiaire de couloirs et de déflecteurs fixes, de sections (SA, SB) pour le formage de produits de différentes natures (A, B).

8. Installation selon l'une des revendications 1 à 4 comprenant un système du type gob-distributeur pour la récupération et la distribution des paraisons issues du système d'alimentation, ledit gob-distributeur étant prolongé par des cuillers.

9. Installation selon l'une des revendications 7 ou 8 comprenant en outre des moyens d'éjection (18, 19, 20) associés à chaque paraison (3a, 3b) délivrée par le système d'alimentation (1).

10. Installation selon la revendication 9 dans laquelle l'action respective des moyens d'éjection est couplée avec celle du gob distributeur de telle manière qu'au cours d'un cycle, l'action des moyens d'éjection (18, 19, 20) permette l'éjection d'au moins une paraison perdue et que le mouvement du gob distributeur permette la récupération d'au moins une autre paraison par au moins une cuiller et l'alignement, par l'intermédiaire de couloirs et de déflecteurs fixes, de cette ou ces cuillers (9a, 9b) sur la ou les sections correspondantes (SA, SB).

11. Installation selon la revendication 8 ou 9 dans laquelle chaque cuiller est commandée par un système séparé, par exemple par un jeu pignon-crémaillère différent, ladite commande séparée étant configurée pour permettre l'alignement de chaque cuiller supportée par le gob-distributeur avec les différentes sections individuelles selon un ordre défini, au cours des cycles successifs de formage de produits de différentes natures (A, B).

12. Installation selon l'une des revendications précédentes, comprenant en outre un dispositif permettant une ventilation asymétrique de deux moules différents et contigus sur la machine IS, ledit dispositif comprenant un empilement non symétrique de pièces (31) fermées ou comprenant des ouvertures (34) pour la ventilation d'air vers les parties à refroidir des moules.

13. Procédé de fabrication d'au moins deux produits de taille et/ou de morphologie différents en verre, par une installation selon la revendication 1, par une machine IS dans lequel le nombre de paraisons formées au cours d'un cycle de la machine est supérieur au nombre de moules ébaucheurs ou finisseurs compris dans une section individuelle de ladite machine IS.

14. Procédé selon la revendication 13 dans lequel l'alimentation des sections est effectuée par l'action d'un jeu de vérins pneumatiques, chaque vérin supportant une ou plusieurs cuillers et chaque cuiller étant amenée en position pour alimenter une section individuelle de la machine IS dans un ordre déterminé, via un système couloir/déflecteur fixe.

15. Procédé selon la revendication 14 dans lequel l'alimentation des sections est effectuée par l'action d'un mécanisme gob-distributeur, prolongé par une série de cuillers, chaque cuiller étant amenée en position pour alimenter une section individuelle de la machine IS, dans un ordre déterminé, via un système couloir/déflecteur fixe.

16. Procédé selon l'une des revendications 13 à 15 dans lequel au moins une des paraisons délivrées par le système d'alimentation n'est pas utilisée pour le formage des différents produits.

17. Procédé selon la revendication 13 à 15 dans lequel toutes les paraisons délivrées par le système d'alimentation sont utilisées pour le formage des différents produits.

18. Procédé selon l'une des revendications 13 à 17 dans lequel les sections individuelles sont alimentées dans un ordre permettant une succession déterminée des produits en sortie de la machine IS.

19. Utilisation de l'installation selon l'une des revendications 1 à 12, ou du procédé selon l'une des revendications 13 à 18 pour le formage de récipients en verre telle que des bouteilles, pots, bouchons ou flacons.

## Patentansprüche

1. Anlage für die Herstellung von wenigstens zwei Produkten (A, B) aus Glas, mit unterschiedlicher Größe und/oder Morphologie, umfassend:
- eine IS-Maschine, die eine Vielzahl von Einzelsektionen (SA, SB), typischerweise zwischen 2 und 20 umfasst, wobei jede Sektion eine gleiche Anzahl von Vorform(en) (12) und Fertigform(en) (13) umfasst, wobei die IS-Maschine wenigstens eine Sektion SA zum Formen des Produkts A sowie wenigstens eine Sektion SB zum Formen des Produkts B umfasst,
- ein System zum Speisen (1) der IS-Maschine, das bei jedem Zyklus die Abgabe von wenigstens zwei Tropfen (3a, 3b) ermöglicht,
wobei die Anlage **dadurch gekennzeichnet ist, dass** das Speisesystem derart ist, dass die wenigstens zwei Tropfen (3a, 3b) ein unterschiedliches Gewicht und/oder eine unterschiedliche Morphologie aufweisen, und dass die durch das Speisesystem gelieferte Anzahl von Tropfen größer ist als die Anzahl der in einer Einzelsektion der IS-Maschine enthaltenen Vor- oder Fertigform(en).

2. Anlage nach Anspruch 1, wobei die Anzahl der gelieferten Tropfen ein ganzes Vielfaches der Anzahl der in jeder Einzelsektion der IS-Maschine enthaltenen Vor- oder Fertigform(en) ist.

3. Anlage nach Anspruch 1 oder 2, wobei das Speisesystem zwei Tropfen liefert und wobei jede Einzelsektion eine Vorform und eine Feitigform umfasst.

4. Anlage nach Anspruch 3, wobei das Speisesystem Tropfenausflussöffnungen mit unterschiedlichem Durchmesser und/oder Plunger, deren Höhe, welche die Bildung der Tropfen ermöglicht, unterschiedlich ist, umfasst.

5. Anlage nach einem der vorstehenden Ansprüche, ferner umfassend ein System zum Verteilen der Tropfen aus dem Speisesystem auf die verschiedenen Sektionen, umfassend eine Auffangrinne/Rutsche/Abweiser-Anordnung, die mit jeder Sektion fluchtend angeordnet ist, wobei die Rutschen und die Abweiser fest sind und die Auffangrinnen an Zylindern angebracht sind.

6. Anlage nach Anspruch 5, wobei eine Auffangrinne (9a, 9b) mittels Zylinder (14a, 14b) angebracht ist, wobei die Zylinder derart gestaltet sind, dass ihre Wirkung ermöglicht, jede Auffangrinne nacheinander in die Position zum Aufnehmen von einem der Tropfen (3a, 3b) aus dem Verteilungssystem zu bringen und diese mittels einer Rutsche und eines festen Abweisers mit einer Vorform (12a, 12b) einer für das Formen eines Produkts (A, B) ausgebildeten Sektion (SA, SB) in Flucht zu bringen.

7. Anlage nach Anspruch 5, wobei mehrere Auffangrinnen (9) mittels Zylinder (14a, 14b, 14c) angebracht sind, wobei die Auffangrinnen ausgerichtet sind und die Zylinder derart gestaltet sind, dass die Wirkung der Zylinder im Laufe eines gleichen Zyklus ermöglicht, die Auffangrinnen in die Position zum Aufnehmen der Tropfen (3a, 3b) aus dem Verteilungssystem (1) zu bringen und diese mittels fester Rutschen und Abweiser mit Sektionen (SA, SB) für das Formen von Produkten unterschiedlicher Arten (A, B) in Flucht zu bringen.

8. Anlage nach einem der Ansprüche 1 bis 4, umfassend ein System vom Typ Tropfenverteiler, für das Auffangen und die Verteilung der Tropfen aus dem Speisesystem, wobei der Tropfenverteiler durch Auffangrinnen verlängert ist.

9. Anlage nach einem der Ansprüche 7 oder 8, ferner umfassend Ausstoßmittel (18, 19, 20), die jedem durch das Speisesystem (1) gelieferten Tropfen (3a, 3b) zugeordnet sind.

10. Anlage nach Anspruch 9, wobei die jeweilige Wirkung der Ausstoßmittel mit derjenigen des Tropfenverteilers derart gekoppelt ist, dass im Laufe eines Zyklus die Wirkung der Ausstoßmittel (18, 19, 20) das Ausstoßen wenigstens eines verlorenen Tropfens ermöglicht und dass die Bewegung des Tropfenverteilers das Auffangen wenigstens eines weiteren Tropfens durch wenigstens eine Auffangrinne sowie das Ausrichten dieser Auffangrinne oder Auffangrinnen (9a, 9b) mittels fester Rutschen und Abweiser auf die entsprechende(n) Sektion(en) (SA, SB) ermöglicht.

11. Anlage nach Anspruch 8 oder 9, wobei jede Auffangrinne durch ein separates System, beispielsweise durch ein anderes Ritzel-Zahnstangen-System gesteuert wird, wobei die separate Steuerung dazu ausgelegt ist, das Ausrichten einer jeden durch den Tropfenverteiler getragenen Auffangrinne mit den verschiedenen Einzelsektionen entsprechend einer definierten Reihenfolge, im Laufe der aufeinanderfolgenden Zyklen zum Formen von Produkten unterschiedlicher Arten (A, B) zu ermöglichen.

12. Anlage nach einem der vorstehenden Ansprüche, ferner umfassend eine Vorrichtung, die eine asymmetrische Belüftung von zwei verschiedenen und benachbarten Formen an der IS-Maschine ermöglicht, wobei die Vorrichtung einen nicht symmetrischen Stapel von Teilen (31) umfasst, die geschlossen sind oder Öffnungen (34) für die Luftventilation in Richtung der zu kühlenden Teile der Formen aufweisen.

13. Verfahren zur Herstellung von wenigstens zwei Produkten aus Glas, mit unterschiedlicher Größe und/oder Morphologie, durch eine Anlage nach Anspruch 1, mittels einer IS-Maschine, bei der die Anzahl der im Laufe eines Zyklus der Maschine gebildeten Tropfen größer ist als die Anzahl der in einer Einzelsektion der IS-Maschine enthaltenen Vor- oder Fertigformen.

14. Verfahren nach Anspruch 13, wobei das Speisen der Sektionen durch die Wirkung eines Systems aus Pneumatikzylindern vollzogen wird, wobei jeder Zylinder eine oder mehrere Auffangrinne(n) trägt und wobei jede Auffangrinne in die Position zum Speisen einer Einzelsektion der IS-Maschine, in einer bestimmten Reihenfolge, über ein festes Rutschen/Abweiser-System gebracht wird.

15. Verfahren nach Anspruch 14, wobei das Speisen der Sektionen durch die Wirkung eines Tropfenverteiler-Mechanismus, der durch eine Reihe von Auffangrinnen verlängert ist, vollzogen wird, wobei jede Auffangrinne in die Position zum Speisen einer Einzelsektion der IS-Maschine, in einer bestimmten Reihenfolge, über ein festes Rutschen/Abweiser-System gebracht wird.

16. Verfahren nach einem der Ansprüche 13 bis 15, wobei wenigstens einer der durch das Speisesystem gelieferten Tropfen nicht für das Formen der verschiedenen Produkte verwendet wird.

17. Verfahren nach Anspruch 13 bis 15, wobei alle durch das Speisesystem gelieferten Tropfen für das Formen der verschiedenen Produkte verwendet werden.

18. Verfahren nach einem der Ansprüche 13 bis 17, wobei die Einzelsektionen in einer Reihenfolge gespeist werden, die eine bestimmte Folge der Produkte am Ausgang der IS-Maschine ermöglicht.

19. Verwendung der Anlage nach einem der Ansprüche 1 bis 12 oder des Verfahrens nach einem der Ansprüche 13 bis 18, für das Formen von Glasbehältern, wie Flaschen, Tiegeln, Verschlüssen oder Flacons.

## Claims

1. Apparatus for manufacturing at least two products (A, B) of different size and/or shape made from glass, comprising:
- an I.S. machine comprising a number of individual sections (SA, SB), typically between 2 and 20, each section containing the same number of blank moulds (12) and finishing moulds (13), the I.S. machine comprising at least one section SA for forming the product A and at least one section SB for forming the product B; and
- a feeding system (1), of said I.S. machine, allowing, in each cycle, at least two parisons (3a, 3b) to be delivered,
said apparatus being **characterized in that** the feeding system is such that said at least two parisons (3a, 3b) are of different weight and/or shape and **in that** the number of parisons delivered by the feeding system is greater than the number of blank or finishing moulds contained in an individual section of the I.S. machine.

2. Apparatus according to Claim 1, in which the number of parisons delivered is an integer multiple of the number of blank or finishing moulds contained in each individual section of the I.S. machine.

3. Apparatus according to either one of Claims 1 and 2, in which the feeding system delivers two parisons and in which each individual section comprises one blank mould and one finishing mould.

4. Apparatus according to Claim 3, in which the feeding system comprises parison stream orifices of different diameter and/or plungers the height of which allows different parisons to be formed.

5. Apparatus according to one of the preceding claims, furthermore comprising a system for distributing the parisons from the feeding system to the various sections, comprising a scoop/trough/deflector assembly fitted in alignment with each section, the troughs and the deflectors being fastened and the scoops being mounted on the cylinders.

6. Apparatus according to Claim 5, in which a scoop (9a, 9b) is cylinder mounted, said cylinders (14a, 14b) being configured in such a way that their action allows each scoop to be brought, in succession, into a position for collecting one of the parisons (3a, 3b) output from the distributing system, and said parison to be brought into alignment, via a fastened trough and deflector, with a blank mould (12a, 12b) of a section (SA, SB) configured to form a product (A, B).

7. Apparatus according to Claim 5, in which a plurality of scoops (9) are cylinder mounted, the scoops being oriented and the cylinders (14a, 14b, 14c) being configured in such a way that the action said cylinders allows, during a given cycle, said scoops to be brought into a position for collecting the parisons (3a, 3b) output from the distributing system (1), said parisons to be brought into alignment, via fastened troughs and deflectors, with sections (SA, SB) for forming products (A, B) of different natures.

8. Apparatus according to one of Claims 1 to 4, comprising a gob distributing system for collecting and distributing parisons output from the feeding system, said gob distributer being extended by scoops.

9. Apparatus according to either one of Claims 7 and 8, furthermore comprising ejecting means (18, 19, 20) associated with each parison (3a, 3b) delivered by the feeding system (1).

10. Apparatus according to Claim 9, in which the respective action of the ejecting means is coupled with that of the gob distributor such that during a cycle the action of the ejecting means (18, 19, 20) allows at least one reject parison to be ejected, and such that the movement of the gob distributor allows at least one other parison to be collected by at least one scoop and this or these scoops (9a, 9b) to be aligned, via fastened troughs and deflectors, with the corresponding section or sections (SA, SB).

11. Apparatus according to either of Claims 8 and 9, in which each scoop is controlled by a separate system, for example a different rack and pinion gear, said separate control being configured to allow each scoop supported by the gob distributor to be aligned with the various individual sections in a defined order, during successive cycles for forming products of different natures (A, B).

12. Apparatus according to one of the preceding claims, furthermore comprising a device allowing asymmetric cooling of two different and contiguous moulds in the I.S. machine, said device comprising a non-symmetric stack of parts (31) that are closed or comprise apertures (34) for blowing air onto the portions to be cooled of the moulds.

13. Process for manufacturing at least two products of different size and/or shape made of glass, using an apparatus according to Claim 1, in an I.S. machine in which the number of parisons formed during a machine cycle is greater than the number of blank or finishing moulds contained in an individual section of said I.S. machine.

14. Process according to Claim 13, in which sections are fed by the action of a set of pneumatic cylinders, each cylinder supporting one or more scoops and each scoop being brought into a position for feeding an individual section of the I.S. machine, in a set order, via a fastened trough/deflector system.

15. Process according to Claim 14, in which sections are fed by the action of a gob distributor mechanism, extended by a series of scoops, each scoop being brought into a position for feeding an individual section of the I.S. machine, in a set order, via a fastened trough/deflector system.

16. Process according to one of Claims 13 to 15, in which at least one of the parisons delivered by the feeding system is used to form none of the various products.

17. Process according to Claims 13 to 15, in which all the parisons delivered by the feeding system are used to form various products.

18. Process according to one of Claims 13 to 17, in which the individual sections are fed in an order allowing the products to be output in a set succession from the I.S. machine.

19. Use of the apparatus according to one of Claims 1 to 12, wherein the process according to one of Claims 13 to 18 is used to form glass containers such as bottles, pots, caps or flasks.
